# EUROPEAN PATENT APPLICATION

(11) **EP 1 908 607 A1**
(43) Date of publication of application: **09.04.2008**
(21) Application number: 05818052.2
(22) Date of filing: 07.06.2005
(51) Int. Cl.: B44F 1/00, B65D 85/57

(54) **PACKAGE PROVIDED WITH A PROTECTIVE ELEMENT AND METHOD FOR THE PRODUCTION THEREOF, IN PARTICULAR IN THE FORM OF A COMPACT-DISC CASE**

(71) Applicant: Milimarex Limited, P.C. 3021 Lymasol (CY); Zuev, Boris Alexandrovich, Kurskaya obl., 125080 (RU)
(72) Inventor: ZAITSEVSKY, Alexei Vadimovich, LT-09204 Vilnius (LT)
(74) Representative: HOFFMANN EITLE
(86) International application number: PCT/RU2005/000313
(87) International publication number: WO 2006/132562

(57) **Abstract**

The inventive package, preferably a compact disc case, provided with an element for protecting it against counterfeiting has a portion (3) of a transparent material, on the surface of which a relief is made in the form of a plurality of grooves whose angle and interval of constructing are equal respectively to the angle and interval of constructing the raster elements on the surface of the insert (4) having a rasterized printed image and arranged beneath the transparent material. Included into the relief on the transparent material and/or into the raster structure on the surface of the portion (5) of the insert are geometrical distortions whose magnitude corresponds to the magnitude of tonal gradations for an additional concealed protecting image. When the portions (3) and (5) are brought into coincidence with one another, the additional image shows itself-up against the background of the main image due to the focusing effect of the lenses defined by the walls of the grooves. The inventive case provided with a protecting element can be formed in the cover of an already available case by applying high pressure thereto with a hot or cold die comprising a predetermined relief or by way of casting into a mould in the process of manufacturing.

## Description

### Field of the Invention

The present invention relates to the field of packages and, more specifically, it is directed to a package provided with an element for protecting against counterfeiting and, in particular, to such kind of package as a compact disc case and to a method of its manufacturing.

### State of Prior Art

At present, a package is known that is provided with an element for protecting it against counterfeiting, for instance, a package with the manufacturer's trademark applied to the surface thereof by rasterization or in the form of a holographic image. However, such protection is not reliable enough, and a package with said protecting element can be readily manufactured by a malefactor at the contemporary level of development in the field of polygraphic equipment.

Packages, such as a compact disc case, a box for cigarettes or for a vial with a perfumery product, are known whose upper layer comprises a tightly tensioned transparent cellulosic packing shell, beneath which a protecting element a mark with a holographic image or a label with a rasterized printed protecting image fixed to the surface of the case or box - is arranged.

For its production, such a package requires carrying out a number of subsequent operations (manufacturing a box, manufacturing a protecting mark or label, arranging thereof on the surface of the box, enclosing the box into a transparent shell) and, hence, large expenses and efforts so that, therefore, it presents substantial difficulties for a malefactor if he wishes to reproduce it. The most complicated in this case is the operation of manufacturing the protecting element. However, this element can be reproduced precisely enough at the contemporary level of development of copying equipment.

### Disclosure of the Substance of the Invention

It is an object of the invention to provide a package that is provided with such a protecting element, which would ensure a high degree of protection and present substantial complications for malefactors in an attempt of reproducing it without approval, and preferably, to provide a compact disc package which would present substantial difficulties on the way of manufacturing counterfeited products as well as to provide a method for manufacturing such package.

The object thus aimed at is accomplished by that, in a package provided with an element for protecting it against counterfeiting and having at least one part thereof made of a transparent material and an insert with a rasterized printed protecting image arranged beneath the transparent material, according to the invention, a relief is made on the surface of the transparent material in the form of a plurality of non-intersecting grooves whose angle and interval of constructing are equal respectively to the angle and interval of constructing the raster elements on the surface of the insert, wherein included into the relief on the transparent material and/or into the raster structure on the insert are geometrical distortions that are perpendicular to the main direction and whose magnitude corresponds to the magnitude of tonal gradations for an additional concealed image without disturbing the continuity of the structural lines they are defined by and so as to form a non-uniform system of points where the grooves in the transparent medium intersect the raster structure lines when they are brought into coincidence provided by the focusing effect of the lenses defined by the walls of the grooves so as to show up thereby the additional concealed protecting image against the background of the main protecting image.

In a preferable embodiment, the package comprises a compact disc case whose cover is made of a transparent plastic and has a relief in the form of a plurality of grooves within at least a portion of the upper surface thereof, wherein the shape of the groove lateral walls and the cover thickness are selected so as to ensure focusing the observer's sight at the surface of that portion of an information insert where a rasterized main protecting image and an additional protecting image are located and which is adjacent to the lower surface of said portion of the cover.

The object thus aimed at is also accomplished by that a method of manufacturing a compact disc case comprising a body with a transparent cover and an information insert arranged beneath the cover consists in that a relief comprising a plurality of grooves having predetermined angle and interval of constructing is made on the outer surface of the cover, and an image is applied to the face of the information insert for said case by way of rasterization with the same interval and angle of constructing the raster elements, wherein geometrical distortions perpendicular to the main direction are included into the relief on the cover and/or into the raster structure on the insert, the magnitude of which distortions corresponds to the magnitude of tonal gradations for an additional concealed protecting image, and the walls of the grooves are shaped up as lenses focused at the elements of the raster on the surface of the insert arranged beneath the cover, thus enabling to observe the additional concealed image against the background of the main image.

In this case, it is possible to use an already finished case with a cover made of a transparent plastic and to form the relief on the surface of the cover by applying high pressure thereto with a hot or cold die comprising a predetermined relief.

It is also possible to form the relief on the surface of the cover by way of casting into a mould comprising a predetermined relief in the process of casting the case.

### Brief Description of the Drawings

Hereinafter, the present invention will be explained by describing its particular embodiments with references made, when describing them, to the accompanying illustrations, in which:
Fig. 1 illustrates a compact disc package provided with a protecting element, according to the invention, in a general view;
Fig. 2a, b, c are sectional views of a case cover along line II-II, alternative embodiments;
Fig. 3 is an enlarged view showing a fragment of an insert for the case illustrated in Fig.2;
Fig. 4 shows the same insert fragment as illustrated in Fig. 3, but when observed through the transparent cover of the case that is provided with a relief, according to the invention.

### Detailed Description of the Preferred Embodiments of the Invention

In the context of the present invention, a package implies any package provided with an element for protecting it against counterfeiting and having at least one part within the surface thereof made of a transparent material (plastic, laminating film, etc.), beneath which an insert is arranged that has a rasterized printed image. According to the present invention, the protecting element requires indispensable existence of the above-mentioned two elements: a portion made of a transparent material, and an insert with a rasterized printed image arranged beneath it.

The substance of the invention consists in that a relief is made on the surface of the transparent material in the form of a plurality of non-intersecting grooves whose angle and interval of constructing are equal respectively to the angle and interval of constructing the raster elements on the surface of the insert in a selected color layer. Along with this, the walls of the grooves are shaped up as optical lenses to allow focusing the sight at alternating areas on the surface of the insert where a rasterized image is applied thereto. The required parameters of focusing are defined by the shape of the grooves, by the relative index or refraction and by the thickness of the transparent material.

Besides, included into the relief and/or structure on the insert are geometrical distortions that are perpendicular to the main direction and whose magnitude corresponds to the magnitude of tonal gradations for an additional concealed image without disturbing the continuity of the structural lines they are defined by and so as to form a non-uniform system of points where the grooves on the surface of the transparent material intersect the raster structure lines when they are brought into coincidence owing to the focusing effect of said optical lenses. The image on the insert outside the transparent material can be of various contents printed in different color variations. This image can be copied by various known methods. When observing the insert through the transparent material with an optical relief corresponding thereto, the additional image can be seen together with the main image on the insert. If the insert is capable of moving beneath the transparent material with an optical relief, the additional image will change hues. No precise positioning of individual raster elements relative to the grooves in the relief of the transparent material is required. In order that the additional image would show itself up invariably well, the maximum displacement (geometrical distortion) should not be less than one complete period of constructing the grooves of the optical relief on the surface of the transparent material. In this case, the contrasting objects of the additional image show themselves up in the form of their contours. Thus, both an insert with an image and a transparent material with an optical relief or, else, these two elements simultaneously can be the medium for a concealed image. The image is transferred to the printing plates by way of photo output, or digital printing is used for this purpose. The image is printed on the insert by an offset, flexographic or any other method of printing that allows printing rasterized images. In order that the concealed image effect would show itself up, it is necessary to ensure indispensably twin parametric compliance between the insert with an image and the transparent material with an optical relief. Repeating the raster applied to an insert or the relief formed on a transparent material, if they have no deformations, can be regarded as not inconceivable. A package comprising an insert with a deformed structure of the raster and a transparent material with a deformed structure of the relief constitute an alternative that is protected the best of all when using the technologies described herein above. A method of forming deformed structures of the raster so that a concealed image can be thus recorded has been already disclosed in detail in an earlier patent application filed by the same applicant, see in the publication: WO 2005/022972 A2.

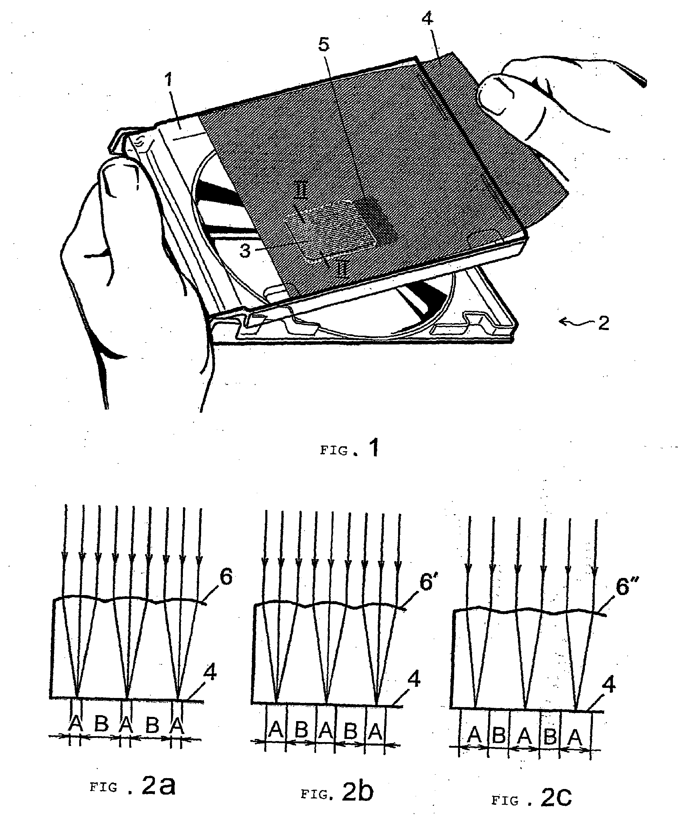

The invention will be understood better when reading the description of a particular embodiment of the package, i.e., a compact disc cage whose general view is shown in Fig. 1.

A cover 1 for a compact disc case 2 is made of a transparent plastic and has such a portion 3 on the surface thereof where a relief in the form of a plurality of non-intersecting grooves is formed on the surface. An information insert 4 with a rasterized printed image is arranged beneath the cover 1, where geometrical distortions are included into the raster structure perpendicularly to the main direction of the structural lines within a portion 5 on the surface of the insert 4, with the magnitude of these distortions corresponding to the magnitude of tonal gradations of the additional concealed protecting image that cannot be seen when looking directly at the surface of the insert 4. But, when the insert 4 is located in a pocket provided beneath the cover 1 so that the portion 5 on the surface of the insert gets positioned below the portion 3 with a relief on the surface thereof, this concealed image shows itself up and becomes visible owing to the focusing effect of optical lenses thus formed on the walls of the relief grooves.

Fig. 2a, b, c illustrates three alternatives of the profile 6, 6'and 6", respectively, for the optical relief of lenses on the surface of the grooves formed in the transparent material within the portion 3. The letter "A" designates the visible areas within the surface of the insert 4 that is held up tightly against the transparent material, and the letter "B" designates the areas hidden from view. Depending on the shape of the relief, the relation between visible and invisible areas A and B, respectively, may vary. If the interval between the insert 4 and the transparent material increases, the focusing gets disturbed, and the concealed image will show itself up worse.

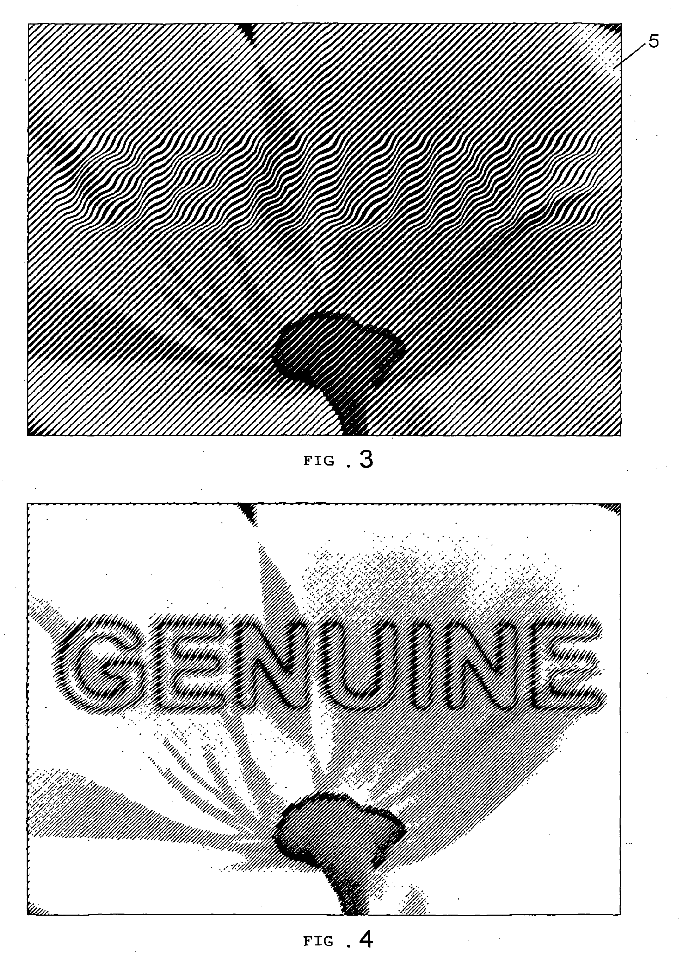

Figure 3 is an enlarged representation of a fragment of the image that is rasterized within the portion 5 of the insert 4. The geometrical structure of the raster has distortions, the coordinates and magnitude of which are determined by the contents of the additional concealed image.

Figure 4 illustrates how a concealed image (the word "GENUINE") shows itself up against the background of the main image (an image of a flower), when the rasterized image represented in Fig. 3 is viewed through the transparent material at the portion 3 with an optical relief having appropriate parameters. Observation of such an image at different angles will cause a variation in the hues of both the main and additional images. The concealed image shows itself up in the form of contours of the predetermined additional image independently of the observation angle and the accuracy with which the insert is positioned relative to the transparent material it is covered by.

In the embodiment of the compact disc case as described herein above, the geometrical distortions have been included into the structure of a raster for a printed image on the surface of a paper insert in order to form thereby a protecting concealed image.

However, such distortions can be included into the structure of a relief on the surface of a transparent material or, else, simultaneously both into the structure of a raster and into the structure of a relief. In this case, the latter alternative, as it has been already pointed out herein above, is preferable from the viewpoint of protection reliability.

A relief can be applied to the surface of a transparent material by a high-pressure method using a hot or cold die comprising a predetermined relief or, else, by rolling. In doing so, when manufacturing a compact disc case, use can be made of already finished cases having a transparent cover.

A relief can be also formed in the process of manufacturing the case by way of casting into a mould comprising a predetermined relief.

A relief is engraved on the surface of a die or a mould in a computer-controlled engraving miller. In order that the main visible image on the surface of an insert would remain clean, and the additional concealed image would show itself up clearly, it is necessary to ensure a high surface finish when machining the surface in the miller.

### Industrial Applicability

The package, according to the invention, can be manufactured with the use of available professional polygraphical and copying equipment.

Preferably, the invention is designed for using thereof in the manufacture of a compact disc package protected against counterfeiting.

## Claims

1. A package provided with an element for protecting it against counterfeiting and having at least one part thereof made of a transparent material and an insert (4) with a rasterized printed protecting image arranged beneath the transparent material, **characterized in that**, a relief is made on the surface of the transparent material in the form of a plurality of non-intersecting grooves whose angle and interval of constructing are equal respectively to the angle and interval of constructing the raster elements on the surface of the insert (4), wherein included into the relief on the transparent material and/or into the raster structure on the insert are geometrical distortions that are perpendicular to the main direction and whose magnitude corresponds to the magnitude of tonal gradations for an additional concealed image without disturbing the continuity of the structural lines they are defined by and so as to form a non-uniform system of points where the grooves in the transparent medium intersect the raster structure lines when they are brought into coincidence provided by the focusing effect of the lenses defined by the walls of the grooves so as to show up thereby the additional concealed protecting image against the background of the main protecting image.

2. The package according to claim 1, **characterized in that** it comprises a compact disc case (2) whose cover (1) is made of a transparent plastic and has a relief in the form of a plurality of grooves within at least a portion (3) of the upper surface thereof, wherein the shape of the groove lateral walls and the thickness of the cover (1) are selected so as to ensure focusing the observer's sight at the surface of the information insert (4) where a rasterized main protecting image and an additional protecting image are located and which is adjacent to the lower surface of said portion (3) of the cover (1).

3. A method of manufacturing a compact disc case comprising a body with a transparent cover and an information insert arranged beneath the cover, the method consisting in that a relief comprising a plurality of grooves having predetermined angle and interval of constructing is made on the outer surface of the cover, and an image is applied to the face of the information insert for said case by way of rasterization with the same interval and angle of constructing the raster elements, wherein geometrical distortions perpendicular to the main direction are included into the relief on the cover and/or into the raster structure on the insert, the magnitude of which distortions corresponds to the magnitude of tonal gradations for an additional concealed protecting image, and the walls of the grooves are shaped up as lenses focused at the elements of the raster on the surface of the insert arranged beneath the cover, thus enabling to observe the additional concealed image against the background of the main image.

4. The method according to claim 3, **characterized in** using an already finished case with a cover made of a transparent plastic, and forming the relief on the surface of the cover by applying high pressure thereto with a hot or cold die comprising a predetermined relief.

5. The method according to claim 3, **characterized in** forming the relief on the surface of the cover by way of casting into a mould comprising a predetermined relief in the process of casting the case.
